# EUROPEAN PATENT SPECIFICATION

(11) **EP 0 552 988 B1**
(45) Date of publication and mention of the grant of the patent: **25.10.1995**
(21) Application number: 93300502.7
(22) Date of filing: 21.01.1993
(51) Int. Cl.: C09K 5/00, C23F 11/08

(54) **Antifreeze composition**
Gefrierschutzmittel
Composition antigel

(30) Priority: 21.01.1992 FR 9200842
(43) Date of publication of application: 28.07.1993
(73) Proprietor: BP Chemicals Limited, London EC2M 7BA (GB); BP CHEMICALS S.N.C., 92400 Courbevoie (FR)
(72) Inventor: Decroocq, Serge, F-13117 Lavera (FR)
(74) Representative: Hymers, Ronald Robson

(56) References cited:
- EP-A- 0 299 942
- GB-A- 2 138 837
- US-A- 4 587 028

## Description

The present invention relates to an antifreeze composition containing additives as well as to an aqueous heat transfer fluid obtained from the antifreeze composition.

It is known to use aqueous heat transfer fluids in heat exchangers such as, for example, central heating circuits or cooling circuits of internal combustion engines. In general, the heat transfer fluid comes into contact with diverse metals or alloys forming the various parts of these circuits, such as, for example, copper, brass, steel, cast iron, aluminium and the tin and lead alloys forming the welds. Thus, corrosion problems become particularly difficult and complex, not only because of the need to protect each of the metals or alloys individually against corrosion but also because of galvanic phenomena which can appear between the various metals or alloys present.

In the case of some heat exchanger circuits, such as the cooling circuits of internal combustion engines, in particular those operating in motor vehicles, corrosion protection problems in particular involve aqueous heat transfer fluids obtained from antifreeze compositions. These antifreeze compositions generally comprise organic compounds such as monoethylene glycol. In general, a small proportion of corrosion inhibitors is added to these compositions. The antifreeze compositions thus obtained are mixed with water in order to prepare the ready-to-use heat transfer fluid. The ratio of the amount of antifreeze to the amount of water is determined by the desired freezing point of the fluid.

Aqueous fluids which contain a dicarboxylic acid and an alkali metal molybdate and which can also usefully contain silicates are disclosed in US Patent 4 561 990.

US Patent 4 587 028 adresses the problems that the presence of silicates can promote the appearance of insoluble gels during storage of an aqueous fluid and that the anticorrosive properties of silicates, in particular with respect to aluminium, decrease sharply or even disappear completely during the use of the aqueous fluid. US Patent 4 587 028 discloses an antifreeze composition free from silicate. This composition contains a benzoic acid salt, a dicarboxylic acid salt and an alkali metal nitrate. However, this antifreeze composition also generally contains a nitrite and in particular sodium nitrite. The use of a nitrite in an aqueous fluid is not advisable because, under certain conditions, a nitrite can be converted, by reaction with an amine, into a nitrosamine, which is a carcinogenic compound hazardous to human health.

European Patent EP-A-0 299 942 refers to an antifreeze composition free from silicate and nitrate. This composition contains an aromatic polybasic acid or an aliphatic dicarboxylic acid both combined with sodium benzoate.

An antifreeze composition free from silicate and nitrite has now been found which nevertheless has very good properties. Surprisingly, the composition according to the invention has good anticorrosive properties with respect to metals and in particular with respect to aluminium alloys and good anticorrosive properties with respect to solders with a moderate and high lead content. These good properties are maintained over an adequate period. Furthermore, before being used the composition can be stored for a prolonged period of time without formation of significant amounts of insoluble gels.

The present invention therefore relates to an antifreeze composition essentially based on glycol and containing an alkali metal molybdate or ammonium molybdate and a salt of a first aliphatic acid which is a diacid, characterised in that it also contains (a) a salt of an alkaline-earth metal and (b) a salt of a second aliphatic acid which is a second diacid which differs from the first or a saturated monoacid or a mixture of the second diacid and of the saturated monoacid and in that the composition is free from silicate and nitrite.

Throughout the description and the examples a salt of a carboxylic acid can be, for example, a sodium, a potassium or an ammonium salt.

According to the present invention, the antifreeze composition must contain at least one alkali metal molybdate or ammonium molybdate, which in most cases is sodium molybdate hydrate or potassium molybdate hydrate. This molybdate in general represents from 0.05 to 1.5 % by weight of the antifreeze composition.

The antifreeze composition also contains a first aliphatic acid, which generally is a saturated diacid containing from 3 to 12 carbon atoms. The saturated diacid used is generally malonic acid, succinic acid, glutaric acid, adipic acid or pimelic acid and preferably sebacic acid or azelaic acid. The first aliphatic acid is generally used in an amount which represents, by weight, from 0.5 % to 3 % of the composition.

The antifreeze composition also contains an alkaline-earth metal salt used in an amount which can be, for example, from 0.01 to 0.5% by weight of the composition. This salt is in most cases magnesium nitrate.

The antifreeze composition also essentially contains a second aliphatic acid which is either a second aliphatic diacid which differs from the first, or a saturated aliphatic monoacid. Very surprisingly, it has been found that the best results, in particular with respect to the protection of aluminium, are obtained when the aliphatic acid is a mixture of second diacid and saturated monoacid, that is to say when the antifreeze composition contains three different aliphatic acids.

The second diacid is used, for example, in an amount which represents, by weight, from 0.1 to 2 % of the composition. The second diacid can be a saturated diacid containing, for example, from 4 to 6 carbon atoms, or an unsaturated diacid containing, for example, from 3 to 12 carbon atoms. However, it is preferred to use an unsaturated diacid comprising an ethylenic double bond. This unsaturated diacid can have the following formula R₁ HC = C R₂ R₃ in which :
- R₁ represents a hydrogen atom or an alkyl radical containing from 1 to 4 carbon atoms.
- R₂ represents a radical of formula -(CH₂-)ₙ COOH, with n an integer ranging from 0 to 5.
- R₃ represents a radical of formula -(CH₂)ₘ COOH, with m an integer ranging from 1 to 5.

The unsaturated diacid used is in most cases itaconic acid.

The saturated monoacid is used in an amount which generally represents from 0.5 to 3 % by weight of the composition. It is generally a monoacid containing from 5 to 10 carbon atoms, such as normal or isoheptanoic acid.

According to the invention it is essential to use in the composition at least two salts of two different aliphatic acids. When salts of non-aliphatic acids such as aromatic acids are used, the antifreeze composition has poorer anticorrosive properties with respect to metals, in particular with respect to aluminium and to aluminium alloys. Furthermore it has also a lower reserve alkalinity.

According to the invention, the glycol can be, for example, monoethylene glycol, monopropylene glycol, their higher homologues or a monoethylene glycol ether or a monopropylene glycol ether.

According to the invention, the composition can contain other additives in addition to those mentioned above. In particular, it can contain inorganic bases, such as sodium hydroxide or potassium hydroxide, intended to neutralise the acids used. Furthermore, it can contain additives intended to increase the reserve alkalinity of an aqueous fluid, such as phosphates. However, the use of this additive is not obligatory because an aqueous fluid obtained from a composition according to the present invention which is free from this additive already has a large reserve alkalinity. Thus, according to one variant of the invention, the composition can be substantially free from phosphate.

The composition can also optionally contain certain specific corrosion inhibitors, such as nitrates, or triazoles and in particular tolyltriazole, and benzyltriazole, as well as antifoam and antisettling additives. The composition can also optionally contain additives such as amines or borax or an alkalimetal borate such as sodium tetraborate.

The composition can optionally contain a sequestering agent for divalent ions such as calcium and magnesium. Preferably, the sequestering agent used is 2-phosphonobutane-1,2,4-tricarboxylic acid. In fact, surprisingly, it has been found that this acid is particularly effective for preventing precipitation of calcium molybdate, in particular when an aqueous fluid is prepared using hard water. This effect has been found more particularly when the acid is used in an amount which represents from 50 to 500 ppm of the composition. When the amount of acid is less than 50 ppm precipitation of calcium molybdate may occur and when the amount of acid is greater than 500 ppm, corrosion may be increased. The 2-phosphonobutane-1,2,4-tricarboxylic acid used can be for example a 50% aqueous solution as sold by Bayer (Germany) under the trade name Bayhibit A.M.

The antifreeze composition can be mixed with water in order to form an aqueous heat transfer fluid particularly suitable for preventing the development of corrosion of the metals and alloys with which it is in contact. The aqueous heat transfer fluid generally contains, by volume, from 35 to 85 % of water and from 65 to 15 % of antifreeze composition. The aqueous heat transfer fluid can advantageuosly be used in heat exchanger circuits or in cooling circuits such as cooling circuits of internal combustion engines. This aqueous heat transfer fluid is particularly useful because it reduces corrosion of parts of the cooling circuits comprising metals in particular such as aluminium.

The present invention is illustrated by the examples which follow.

### Examples 1 to 6

The various antifreeze compositions indicated in Table 1 were prepared. In Examples 1, 2 and 6, the compositions were prepared according to the invention, whereas in Examples 3 to 5 the compositions were comparative compositions.

In these various compositions, Bayhibit A.M was used as a sequestering agent for divalent ions, sold by the company Bayer (Germany).

One or more aqueous fluids were prepared for each antifreeze composition and various determinations or various tests were carried out on these fluids.

Table 2 shows the pH determined by ASTM method D 1287/85 in the case of an aqueous fluid containing, by volume, 33 % of antifreeze composition. Table 2 also shows the reserve alkalinity of an aqueous fluid determined in accordance with ASTM method D 1121/88. It was noted that in the Comparative Examples 3 and 4 the reserve alkalinity was particularly low.

Table 3 shows results obtained from the glassware corrosion test carried out in accordance with ASTM method D 1384/87. The change in weight, in mg, obtained with solder or aluminium alloy test pieces has been recorded. It was noted that the corrosion of the aluminium alloy was lowest in the case of the compositions prepared according to the invention. This result was also observed in the case of the corrosion of solder. In Comparative Example 3, the corrosion of solder was particularly high.

Table 4 shows the results of the corrosion test carried out in accordance with ASTM method D 4340/89.

It was noted that the rate of corrosion determined in Comparative Example 5 was particularly high. Moreover, in Example 2, which uses a composition containing 3 different acids, it was found that the rate of corrosion was the lowest.

A hot glassware corrosion test in accordance with British Standard method B.S 5117/1985 section 2.2 was carried out on the composition of Example 6. The loss in weight of the solder test piece containing at least 95 % by weight of lead was 1.5 mg, which was a particularly low loss in weight.

**Table 1**

| **Antifreeze Composition** | | | | | | |
|---|---|---|---|---|---|---|
| Compositions | 1 | 2 | 3 | 4 | 5 | 6 |
| Na₂MoO₄ 2H₂O | 0.90 | 0.90 | 0.90 | - | 0.90 | 0.50 |
| Mg(NO₃)₂ 6H₂O | 0.30 | 0.40 | 0.30 | 0.30 | - | 0.25 |
| Na NO₃ | - | - | - | - | 0.40 | - |
| Sebacic acid | 1.50 | 1.00 | 1.00 | 1.50 | 1.00 | 2.00 |
| Itaconic acid | 0.70 | 1.00 | - | 0.70 | 1.00 | 0.60 |
| Isoheptanoic acid | - | 1.00 | - | - | 1.00 | 2.00 |
| Succinic acid | - | - | - | - | - | - |
| Benzoic acid | - | - | 1.70 | - | - | - |
| Bayhibit AM | 0.01 | 0.01 | 0.01 | 0.01 | 0.01 | 0.02 |
| NaOH | 1.18 | 1.37 | 1.00 | 1.08 | 1.38 | 1.83 |
| Tolyltriazole | 0.10 | 0.10 | 0.10 | 0.10 | 0.10 | 0.15 |
| Water | 1.50 | 1.50 | 1.50 | 1.50 | 1.50 | 1.50 |
| Monoethylene glycol | 93.81 | 92.72 | 93.49 | 94.81 | 92.71 | 91.15 |

**Table 2**

| Example | 1 | 2 | 3 | 4 | 5 | 6 |
|---|---|---|---|---|---|---|
| pH | 8.27 | 8.01 | 8.30 | 8.58 | 7.99 | 7.9 |
| Reserve alkalinity | 9.05 | 10.03 | 5.94 | 7.74 | 10.05 | 12.5 |

**Table 3**

| **Glassware Corrosion Test in accordance with ASTM D 1384/87** | | | | |
|---|---|---|---|---|
| Example | 1 | 2 | 3 | 4 |
| Solder (mg) | -0.9 | -0.4 | -1.7 | -4 |
| Aluminium (mg) | -0.8 | -1.3 | -3.5 | +1.2 |

**Table 4**

| **Corrosion Test in accordance with ASTM D 4340/89** | | | | | |
|---|---|---|---|---|---|
| Example | 1 | 2 | 3 | 4 | 5 |
| Rate of corrosion mg/cm²/week | 0.43 | 0.08 | 0.24 | 0.32 | 4.00 |
| pH before | 8.44 | 8.2 | 8.48 | 8.52 | 8.07 |
| pH after | 7.25 | 7.15 | 7.10 | 7.37 | 6.96 |

## Claims

1. An antifreeze composition essentially based on glycol and containing an alkali metal molybdate or ammonium molybdate and a salt of a first aliphatic acid which is a diacid, characterised in that it also contains (a) a salt of an alkaline-earth metal and (b) a salt of a second aliphatic acid which is a second diacid which differs from the first or a saturated monoacid or a mixture of the second diacid and the saturated monoacid and in that the composition is free from silicate and nitrite.

2. An antifreeze composition according to Claim 1, characterised in that the glycol is monoethylene glycol, monopropylene glycol or a monoethylene glycol ether or a monopropylene glycol ether.

3. An antifreeze composition according to Claim 1 or 2, characterised in that the first aliphatic acid is a saturated aliphatic diacid containing from 3 to 12 carbon atoms.

4. An antifreeze composition according to any one of Claims 1 to 3, characterised in that the alkali metal molybdate is sodium molybdate or potassium molybdate.

5. An antifreeze composition according to any one of Claims 1 to 4, characterised in that the alkaline-earth metal salt is magnesium nitrate.

6. An antifreeze composition according to any one of Claims 1 to 5, characterised in that the second diacid is an unsaturated diacid.

7. An antifreeze composition according to any one of Claims 1 to 6, characterised in that the saturated monoacid contains from 5 to 10 carbon atoms.

8. An antifreeze composition according to any one of Claims 1 to 7, characterised in that it is substantially free from phosphate.

9. An antifreeze composition according to any one of Claims 1 to 8, characterised in that it contains, as sequestering agent for divalent ions, from 50 to 500 ppm of 2-phosphonobutane-1,2,4-tricarboxylic acid.

10. An aqueous heat transfer fluid obtained by dilution with water of an antifreeze composition according to any one of Claims 1 to 9.

11. Use of an aqueous heat transfert fluid according to Claim 10 in a heat exchanger circuit or in a cooling circuit for reducing corrosion of parts of the circuit comprising aluminium.

## Patentansprüche

1. Gefrierschutzmittel, im wesentlichen auf Basis von Glykol, und ein Alkalimetallmolybdat oder ein Ammoniummolybdat und ein Salz einer ersten aliphatischen Säure, welche eine Disäure ist, enthaltend, **dadurch gekennzeichnet**, daß es auch (a) ein Salz eines Erdalkalimetalls und (b) ein Salz einer Zweiten aliphatischen Säure enthält, welche eine zweite Disäure ist, die sich von der ersten unterscheidet, oder eine gesättigte Monosäure oder eine Mischung der zweiten Disäure und der gesättigten Monosäure ist, und daß das Schutzmittel frei von Silicat und Nitrit ist.

2. Gefrierschutzmittel nach Anspruch 1, **dadurch gekennzeichnet**, daß das Glykol Monoethylenglykol, Monopropylenglykol oder ein Monoethylenglykolether oder ein Monopropylenglykolether ist.

3. Gefrierschutzmittel nach Anspruch 1 oder 2, **dadurch gekennzeichnet**, daß die erste aliphatische Säure eine gesättigte aliphatische Disäure ist, welche von 3 bis 12 Kohlenstoffatome enthält.

4. Gefrierschutzmittel nach einem der Ansprüche 1 bis 3, **dadurch gekennzeichnet**, daß das Alkalimetallmolybdat Natriummolybdat oder Kaliummolybdat ist.

5. Gefrierschutzmittel nach einem der Ansprüche 1 bis 4, **dadurch gekennzeichnet**, daß das Erdalkalimetallsalz Magnesiumnitrat ist.

6. Gefrierschutzmittel nach einem der Ansprüche 1 bis 5, **dadurch gekennzeichnet**, daß die zweite Disäure eine ungesättigte Disäure ist.

7. Gefrierschutzmittel nach einem der Ansprüche 1 bis 6, **dadurch gekennzeichnet**, daß die gesättigte Monosäure von 5 bis 10 Kohlenstoffatome enthält.

8. Gefrierschutzmittel nach einem der Ansprüche 1 bis 7, **dadurch gekennzeichnet**, daß es im wesentlichen frei von Phosphat ist.

9. Gefrierschutzmittel nach einem der Ansprüche 1 bis 8, **dadurch gekennzeichnet**, daß es als Sequestrierungsmittel für zweiwertige Ionen von 50 bis 500 ppm 2-Phosphonobutan-1,2,4-tricarbonsäure enthält.

10. Wässerige Wärmeübertragungsflüssigkeit, erhalten durch Verdünnen eines Gefrierschutzmittels nach einem der Ansprüche 1 bis 9 mit Wasser.

11. Verwendung einer wässerigen Wärmeübertragungsflüssigkeit nach Anspruch 10 in einer Wärmeaustauscheranlage oder in einer Kühlanlage zur Reduzierung der Korrosion von Aluminium enthaltenden Teilen der Anlage.

## Revendications

1. Composition antigel essentiellement à base de glycol et contenant un molybdate de métal alcalin ou un molybdate d'ammonium et un sel d'une premier acide aliphatique qui est un diacide, caractérisée par le fait qu'elle contient également (a) un sel d'un métal alcalino-terreux et (b) un sel d'un second acide aliphatique qui est un second diacide différent du premier ou un monoacide saturé ou un mélange dudit second diacide et du monoacide saturé et que la composition est substantiellement exempte de silicate et de nitrite.

2. Composition antigel selon la revendication 1, caractérisée par le fait que le glycol est le monoéthylèneglycol, le monopropylèneglycol ou un éther de monoéthylèneglycol ou un éther de monopropylèneglycol.

3. Composition antigel selon l'une des revendications 1 ou 2, caractérisée par le fait que le premier acide aliphatique est un diacide aliphatique saturé contenant de 3 à 12 atomes de carbone.

4. Composition antigel selon l'une des revendications 1 à 3, caractérisée par le fait que le molybdate de métal alcalin est le molybdate de sodium ou le molybdate de potassium.

5. Composition antigel selon l'une des revendications 1 à 4, caractérisée par le fait que le sel de métal alcalino-terreux est le nitrate de magnésium.

6. Composition antigel selon l'une des revendications 1 à 5, caractérisée par le fait que le second diacide est un diacide insaturé.

7. Composition antigel selon l'une des revendications 1 à 6, caractérisée par le fait que le monoacide saturé contient de 5 à 10 atomes de carbone.

8. Composition antigel selon l'une des revendications 1 à 7, caractérisée par le fait qu'elle est substantiellement exempte de phosphate.

9. Composition antigel selon l'une des revendications 1 à 8, caractérisée par le fait qu'elle contient, comme agent séquestrant pour des ions divalents, de 50 à 500 ppm d'acide 2-phosphonobutane-1,2,4-tricarboxylique.

10. Fluide aqueux de transfert de chaleur obtenu par dilution avec de l'eau d'une composition antigel selon l'une des revendications 1 à 9.

11. Utilisation d'un fluide aqueux de transfert de chaleur selon la revendication 10 dans un circuit d'échangeur de chaleur ou dans un circuit de refroidissement pour réduire la corrosion des parties du circuit comprenant de l'aluminium.
